# EUROPEAN PATENT SPECIFICATION

(11) **EP 3 706 139 B1**
(45) Date of publication and mention of the grant of the patent: **12.02.2025**
(21) Application number: 17929319.6
(22) Date of filing: 30.10.2017
(51) Int. Cl.: G21C 17/10, G21C 17/12, G21D 3/00

(54) **FULLY-DIGITAL ROD POSITION MEASUREMENT DEVICE AND METHOD THEREFOR**
VOLLDIGITALE STABPOSITIONSMESSVORRICHTUNG UND VERFAHREN DAFÜR
DISPOSITIF DE MESURE DE POSITION DE TIGE ENTIÈREMENT NUMÉRIQUE ET PROCÉDÉ ASSOCIÉ

(30) Priority: 16.10.2017 CN 201710957285
(43) Date of publication of application: 09.09.2020
(73) Proprietor: CNNC Nuclear Power Operation Management Co., Ltd, Jiaxing City, Zhejiang 314300 (CN)
(72) Inventor: CHANG, Zhengke, Jiaxing, Zhejiang 314300 (CN); YU, Long, Jiaxing, Zhejiang 314300 (CN); XU, ShengFeng, Jiaxing, Zhejiang 314300 (CN); XU, ShaoHua, Jiaxing, Zhejiang 314300 (CN); CHAO, Bo, Jiaxing, Zhejiang 314300 (CN); XU, Fei, Jiaxing, Zhejiang 314300 (CN); ZHAO, Peng, Jiaxing, Zhejiang 314300 (CN); HUANG, Yuan, Jiaxing, Zhejiang 314300 (CN); YUAN, Chengguang, Jiaxing, Zhejiang 314300 (CN)
(74) Representative: Zaboliene, Reda
(86) International application number: PCT/CN2017/108248
(87) International publication number: WO 2019/075772

(56) References cited:
- CN-A- 101 794 628
- CN-A- 103 474 111
- CN-A- 103 886 923
- CN-A- 106 448 767
- CN-A- 106 448 768
- CN-A- 106 782 711
- CN-A- 106 782 711
- JP-A- H02 145 995
- JP-A- S5 450 785
- US-A- 4 668 465
- US-A- 5 563 922
- US-A- 5 563 922
- US-A1- 2013 148 772
- US-A1- 2015 369 632
- US-A1- 2017 032 855

## Description

### TECHNICAL FIELD OF THE INVENTION

The present invention relates to the technical field of control rod position measurement at nuclear power plants, and more particularly, to a full-digital control rod position measurement device and a method thereof.

### BACKGROUND OF THE INVENTION

In document CN106782711A, which is a signal extraction and error code filtering-out method and device, and relates to the field of nuclear power measurement. The cited solution includes the signal extraction and error code filtering-out device which is applied to a rod position measurement device which comprises multiple measurement coils, a control rod and a signal processing device, multiple detection points at different positions are arranged in each measurement coil, and the measurement coils are arranged by surrounding the control rod. The method comprises the steps that the signal processing device acquires coil induction signals generated by the measurement coils when the control rod moves in the measurement coils, wherein the coil induction signals are generated when the control rod passes through the detection points; a fundamental current amplitude is extracted from the coil induction signals generated by the measurement coils; the extracted fundamental current amplitude is encoded to obtain first encoding information, and position information of the control rod is obtained according to the first encoding information.

Document US5563922A discloses a method for indicating a position of a control rod. Changes in resistance due to temperature effects and changes in current in a primary coil can all lead to output errors. The method comprises compensating for the errors.

US 2015/0369632 A1 discloses a sensor assembly for indicating the relative location of a metallic object, the sensor assembly including a primary electromagnetic coil arranged to generate a time varying magnetic field, and a secondary electromagnetic col arranged to detect the time varying magnetic field as affected, directly or indirectly, by the object and to output, on the basis of detected time varying magnetic field, a signal indicative of the relative location of the object, at least one of the primary and secondary electromagnetic coils is wound about a core body formed of a material having the same conductivity and/or magnetic permeability as the object.

US 2017/0032855A1 discloses a rod position indication system which includes a drive rod operably coupled to a control rod that is configured to be both withdrawn from and inserted into a reactor core, a number of sensing devices are arranged along a path of the drive rod, and an end of the driven rod passes by or through one or more of the sending devices in response to movement of the control rod relative to the reactor core. The sensing devices are arranged into a plurality of groups and each group includes two or more of the sending devices electrically coupled together. The rod position indication system further includes a control rod monitoring device electrically coupled to each group of sensing devices by a routing wire.

US 4,668,468 discloses a rod position indicting system for a pressurized water reactor generates within containment redundant sets of digital detector signals and applies both sets to each of two communications buses each controlled by a separate bus controller/serial output device located inside of containment. A pair of redundant serial data links transmits the redundant data from each bus controller/serial output device through containment to a dedicated CRT display and the plant computer each of which generates rod position displays from redundant information selected from one of the data links. The data for each rod is selected individually from the redundant signals received on the one data link, rod position is presented in bargraph form on a multi-page display which includes overall status information along with the detailed presentations.

In the prior art, the rapid regulation of reactor power is achieved primarily through controlling the lifting and lowering of the control rod cluster, wherein the lifting and lowering of the rod cluster are controlled by a rod control system.

However, the traditional rod control system does not comprise a feedback mechanism capable of verifying whether the rod cluster control command has been executed correctly. As a result, it's necessary to arrange a rod position measurement system for obtaining the actual position of the rod cluster, monitoring the operation of the rod control system and completing the precise positioning of the control rod cluster.

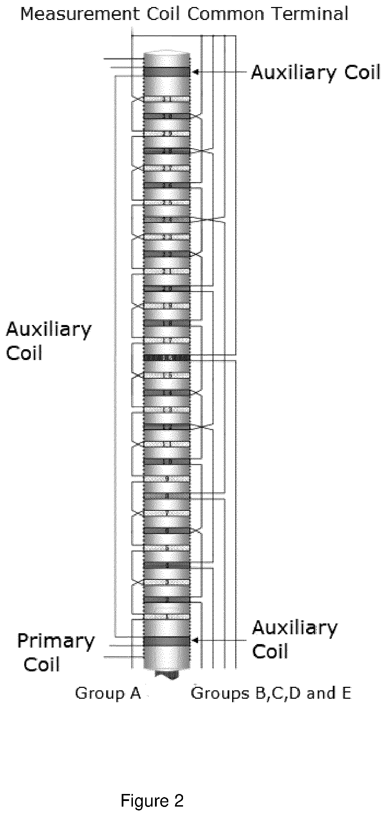

As shown in Figures 2-5, taking Qinshan phase II nuclear power plant as an example, the traditional rod position measurement system comprises 33 rod position detectors, 2 measurement cabinets, 1 distribution cabinet, 1 processing cabinet and 1 rod position display (including 33 rod position display modules). The rod position detectors are located above the control rod driving mechanism on the top of the reactor in the containment. The measurement cabinets and distribution cabinet are located in room L609/649 at a height of 15.5m in the electrical building, the processing cabinet is located in room W228/268 at a height of 0m in the connection building, and the rod position display is located in the main control room. The measurement cabinet is used for providing the excitation power of the primary coil of the detector, and shaping the induced voltage signal of the measurement coil, thereby obtaining the Gray code signal of the rod position. On one hand, the Gray code is sent to the processing cabinet for comparison and processing, and on the other hand, it is converted into a binary code, which is sent to the main control room for display after the photoelectric isolation.

The traditional rod cluster control assembly and its driving shaft are located in an environment with high temperature and high pressure of the nuclear reactor. The position measurement normally utilizes the electromagnetic induction principle, and is performed by using rod position detectors. The traditional rod position detector mainly comprises a primary coil, a measurement coil, an auxiliary coil, a coil frame, a sealing shell and an outer sleeve.

Taking Qinshan phase II nuclear power plant as an example, the rod position detector has a total length of 4006mm, an inner diameter of 154mm and an outer diameter of 300mm. The primary coil is a long solenoid, which is about 2000 turns, has a wire diameter of 1.97mm and is wound along the entire stroke. The measurement coil and the auxiliary coil are both secondary coils, and each of which has 1700 turns, has a width of 2cm and a wire diameter of 0.23mm, and is coaxial with the primary coil. The primary coil is used to generate an alternating magnetic field, the measurement coil is used to form the rod position code, and the auxiliary coil is used to adjust the current of the primary coil.

The driving shaft is made of a magnetic material, while the sealing shell, the coil frame and the outer sleeve of the detector as well as other components in the detector have a low magnetic conductivity. Under such circumstances, whether the driving shaft passes through the measurement coil can greatly affect the induced voltage, and whether the top end of the driving shaft is above or below the measurement coil can be known through monitoring the induced voltage of the measurement coil at a certain position. As long as a sufficient number of measurement coils are arranged to monitor the induced voltage of each coil, the position of the control rod driving shaft can be roughly determined.

To roughly determine the position of the control rod, a sufficient number of measurement coils must be arranged. The number and the spacing of measurement coils are determined according to the stroke length of the driving shaft and the desired resolution. Moreover, to reduce the number of wiring between detectors and signal processing channels, and to reduce the number of signal processing devices, the measurement coils must be grouped.

Taking Qinshan phase II nuclear power plant as an example, the length of each mechanical step of the control rod driving shaft is 15.875mm, and the full stroke is 228 steps. The resolution of the detector is 8 steps (127mm), and there're 31 measurement coils, which are divided into five groups including A, B, C, D and E. The whole measurement stroke is 256 mechanical steps. The measurement coils are grouped as follows:
First, if a measurement coil C1 is wound at the 1/2 height of the detector's measurement stroke, through monitoring its induced voltage (effective value, the same as below) V1, it can be known whether the rod position is in the section [0, 128) or [128, 256).

Further, if the coils C21 and C22 are respectively wound at 1/4 and 3/4 height of the detector's measurement stroke, through monitoring the induced voltage V21 of C21, it can be known whether the rod position is in the section [0, 64) or [64, 128), and through monitoring the induced voltage V22 of C22, it can be known whether the rod position is in the section [128, 192) or [192, 256).

Actually, these three coils have divided the whole measurement stroke into 4 sections with equal length. By monitoring the induced voltages of these three coils, it can be known which section the rod position is in, wherein the induced voltage level and the corresponding rod position are shown in the following table:

| Induced Voltage | | | Section of Rod Position | "Position of Rod Cluster" |
|---|---|---|---|---|
| V21 | V1 | V22 | | |
| Low | Low | Low | [0, 64) | 0 |
| High | Low | Low | [64, 128) | 1 |
| High | High | Low | [128, 192) | 2 |
| High | High | High | [192, 256) | 3 |

If the coils C21 and C22 are series-opposing connected into a group (referred to as C2), for V21 and V22 are always in the same phase, the output voltage of C2 is V2=|V21-V22|, wherein the induced voltage level and the corresponding rod position are shown in the following table:

| Induced Voltage | | After Shaping | | Section of Rod Position | "Position of Rod Cluster" |
|---|---|---|---|---|---|
| V1 | V2 | Low→0, | High→1 | | |
| Low | Low | 0 | 0 | [0, 64) | 0 |
| Low | High | 0 | 1 | [64, 128) | 1 |
| High | High | 1 | 1 | [128, 192) | 2 |
| High | Low | 1 | 0 | [192, 256) | 3 |

Similarly, if the coils C31, C32, C33 and C34 are respectively wound at 1/8, 3/8, 5/8 and 7/8 height of the detector's measurement stroke, and are connected in series to form a group C3, the whole measurement stroke can be divided into 8 sections with equal length. Through monitoring the three voltages V1, V2 and V3 (=|V31-V32+V33-V34|), it can be known which section the rod position is in, and the measurement resolution can reach 32 steps.

Further, if eight coils C41, C42 ... and C48 are respectively wound at 1/16, 3/16, 5/16, 7/16, 9/16, 11/16, 13/16 and 15/16 height of the detector's measurement stroke, and are connected in series to form a group C4, the whole measurement stroke can be divided into 16 sections with equal length. Through monitoring the four voltages V1, V2, V3 and V4 (=|V41-V42+V43... -V48|), it can be known which section the rod position is in, and the measurement resolution can reach 16 steps. Further, if 16 coils C51, C52 ... and C516 are respectively wound at 1/32, 3/32, 5/32...and 31/32 height of the detector's measurement stroke, and are connected in series to form a group C5, the whole measurement stroke can be divided into 32 sections with equal length. Through monitoring the five voltages V1, V2, V3, V4 and V5 (=|V51-V52+V53... -V516|), it can be known which section the rod position is in, and the measurement resolution can reach 8 steps.

Generally, groups C1, C2, C3, C4 and C5 are respectively called group E, D, C, B and A. If the coils are numbered from low to high according to their positions, the coil numbers of each group are:
Coil of Group E (group 1) 16

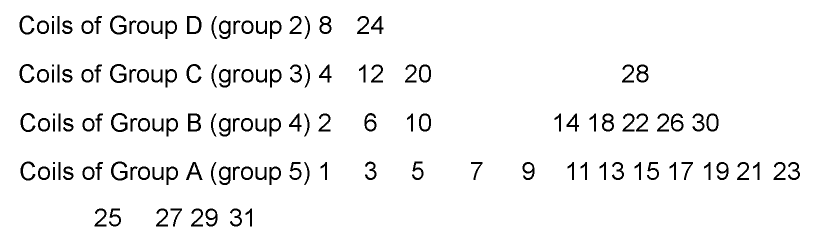

The structure of the detector and the coil numbers are shown in Figure 2.

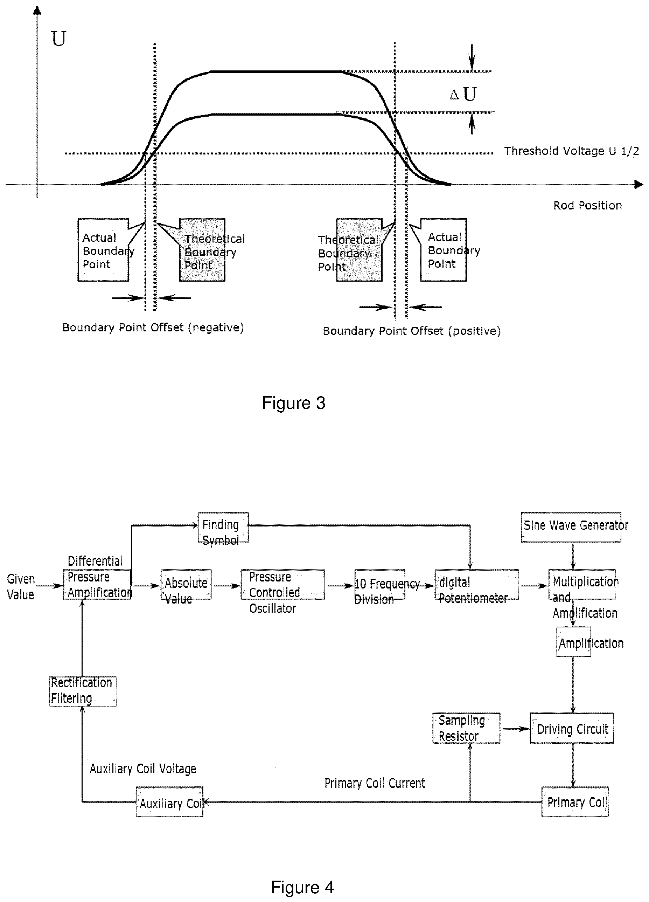

If the excitation voltage of the primary coil of the detector is constant, the impedance in the circuit increases and the current of the primary coil decreases as the control rod driving shaft moves upward. The actual measurement shows that if the current of the primary coil remains unchanged, the induced voltage of the measurement coil when the rod position is at 100 steps is about 10% lower than that when the rod position is at 0 step. In addition, in the cold and thermal working conditions of the reactor, the impedance of the rod position detector varies greatly due to the variation of the ambient temperature. If the magnetic field is not kept constant by means of the adjustment system, the measurement accuracy can be affected. Figure 3 is a diagram showing the offset of the measurement boundary point caused by the variation of magnetic field strength.

Figure 4 is a block diagram showing the excitation control circuit of the primary coil, which is a high-power audio amplifier circuit. The amplitude of 50Hz sine wave is regulated by a digital potentiometer, which is controlled by the frequency signal formed by the difference between the given value and the measured value of the auxiliary coil voltage. The other way is to connect a large resistor in series in the primary excitation circuit instead of arranging an automatic control circuit, thereby making the impedance change caused by the change of the driving shaft position and the change of the detector's ambient temperature small enough to be ignored in the total impedance. The circuit of the former is complex and inevitably has a large number of components. Moreover, the temperature of the measurement clamping piece is high, and the reliability is low. Although the primary circuit of the latter is simple, the power consumption is high, and the measurement precision is low.

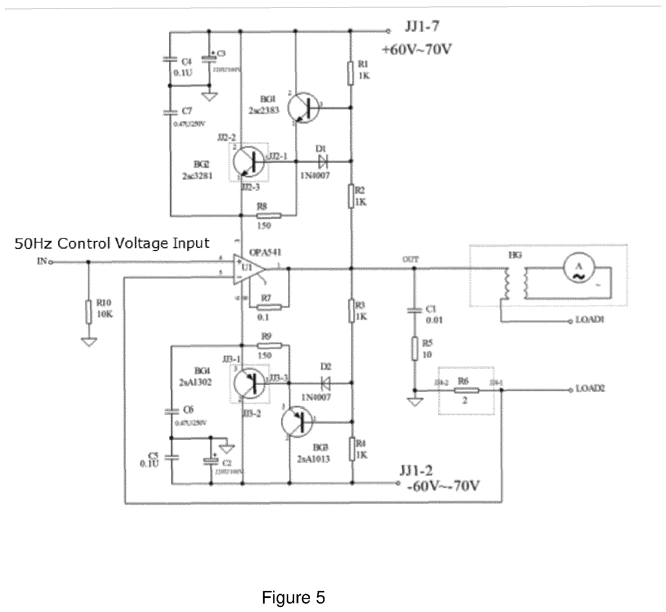

Presently, the signal processing of the secondary measurement coil mainly adopts the filter circuit, shaping circuit and threshold comparison circuit. The processing process is shown in Figure 5 (taking the coils of group D as an example). Its shortcoming is that there are many components, the delay time of filter shaping is long, the threshold voltage needs to be adjusted by repeatedly lifting and lowering the control rod when the reactor is initiated, and it needs to occupy the critical path of the refueling outage for a long time.

To solve the technical problems in the prior art, it's urgent to develop a digital rod position measurement device, which can effectively reduce the complexity of the detector's primary excitation circuit and the secondary measurement signal processing circuit, simplify the threshold setting mode of rod position processing, and improve the reliability and measurement accuracy of rod position processing equipment.

### SUMMARY OF THE INVENTION

The present invention is defined in the independent claims. The purpose of the present invention is to solve the shortcomings in the prior art by providing a full-digital control rod position measurement device and a method thereof, which can effectively reduce the complexity of the primary excitation circuit and the secondary measurement signal processing circuit of the detectors, and improve the operation reliability and measurement accuracy of the rod position processing equipment. To achieve the above purpose, the present invention adopts the following technical solution:
A full-digital rod position measurement device, capable of transforming the core process of rod position measurement that is normally processed by an analog circuit or analog-to-digital mixed circuit into a digital processing, comprising an excitation power supply and a universal signal processor, wherein the excitation power supply provides a working power supply to the primary coils of the rod position detectors located within the containment, wherein the universal signal processor collects the signals output by the rod position detectors, and the signals output by the rod position detectors comprise voltage signals of the primary coils, current signals of the primary coils, voltage signals of each group of measurement coils and voltage signals of the auxiliary coils, wherein the universal signal processor processes the output signals of the detectors according to a preset algorithm, thereby compensating for the variation of magnetic field strength of the rod position detectors, and simultaneously outputs the control rod position signals.

In another aspect of the present invention, the universal signal processor collects the voltage signals of the auxiliary coils of the detectors and the current signals of the primary coils, calculates the voltage amplitudes of the auxiliary coils according to the voltage signals of the auxiliary coils, calculates the voltage amplitudes of primary coils according to the current signals of the primary coils, calculates the voltage amplitudes of each group of measurement coils according to the voltage signals of each group of measurement coils, and processes the voltage signals of each group of measurement coils by using the voltage amplitudes of the auxiliary coils or the current amplitudes of the primary coils, thereby compensating for the measurement signal fluctuation caused by the variation of measurement conditions.

The universal signal processor respectively compares the processed voltages of each group of measurement coils with the preset threshold voltage, thus forming the control rod position signals.

In another aspect of the present invention, the excitation power supply adopts an AC transformer.

A full-digital rod position measurement method, wherein through searching the avoidance interval AB interfered by the control rod motion, the avoidance interval AB is avoided when calculating the voltages of each group of measurement coils, thereby obtaining each group of measurement coil voltage signals representing the actual position of the control rod, wherein the above groups of measurement coil voltage signals are used as the basis for judging the actual position of the control rod, comprising the steps of:
Step S1: collecting the signals of detectors: the universal signal processor collects the output signals of the rod position detectors, wherein the output signals of the rod position detectors comprise the voltage signals of the primary coils, the current signals of the primary coils, the voltage signals of each groups of measurement coils and the voltage signals of the auxiliary coils;
Step S2: determining the calculation interval: according to the auxiliary coil voltage signals, the universal signal processor searches for the starting point A and the ending point B of the avoidance interval that need to be avoided due to the interference of the control rod motion in the searching interval; the ending point B of the avoidance interval is regarded as the starting point of the calculation interval, and the point located 400ms behind the ending point of the avoidance interval is regarded as the ending point C of the calculation interval; the interval between the starting point A of the avoidance interval and the ending point B of the avoidance interval is recorded as the avoidance interval AB, and the interval between the ending point B of the avoidance interval and the ending point C of the calculation interval is recorded as the calculation interval BC;
Step S3: calculating the voltages of auxiliary coils or the currents of primary coils: the universal signal processor calculates the average value of voltage amplitudes of the auxiliary coils or the average value of currents of the primary coils in the calculation interval BC;
Step S4: calculating the voltages of each group of measurement coils: the universal signal processor calculates the voltage amplitude average value of each group of measurement coils in the calculation interval BC;
Step S5: calculating the voltage correction value of each group of measurement coils: the universal signal processor divides the obtained voltage average value of each group of measurement coils by the voltage average value of the auxiliary coils, thereby obtaining the voltage correction value of each group of measurement coils, or divides the obtained voltage average value of each group of measurement coils by the current average value of primary coils, thereby obtaining the voltage correction value of each group of measurement coils;
Step S6: comparing the thresholds: the universal signal processor compares the voltage correction value of the above groups of measurement coils with the preset threshold voltage, thereby forming the control rod position signals.

In another aspect of the present invention, in step S2, when the avoidance interval AB cannot be searched by the universal signal processor, the waveform of 400ms in the searching interval is taken as the calculation interval BC.

In another aspect of the present invention, in steps S3 and S4, the universal signal processor calculates the average value of voltage amplitudes of the auxiliary coils, the average value of voltage amplitudes of the measurement coils or the average value of currents of the primary coils in calculation interval BC by using fast Fourier transform or average peak-to-peak value calculation method.

### BRIEF DESCRIPTION OF THE DRAWINGS

Figure 1 is a system block diagram of the preferred embodiment of the present invention,
Figure 2 is a disclosed diagram showing the coil arrangement and connection mode of rod position detector,
Figure 3 is a disclosed diagram showing the offset of the measurement boundary point caused by the variation of magnetic field strength,
Figure 4 is a disclosed block diagram showing the excitation control circuit of the primary coil,
Figure 5 is a disclosed high-power output circuit diagram,

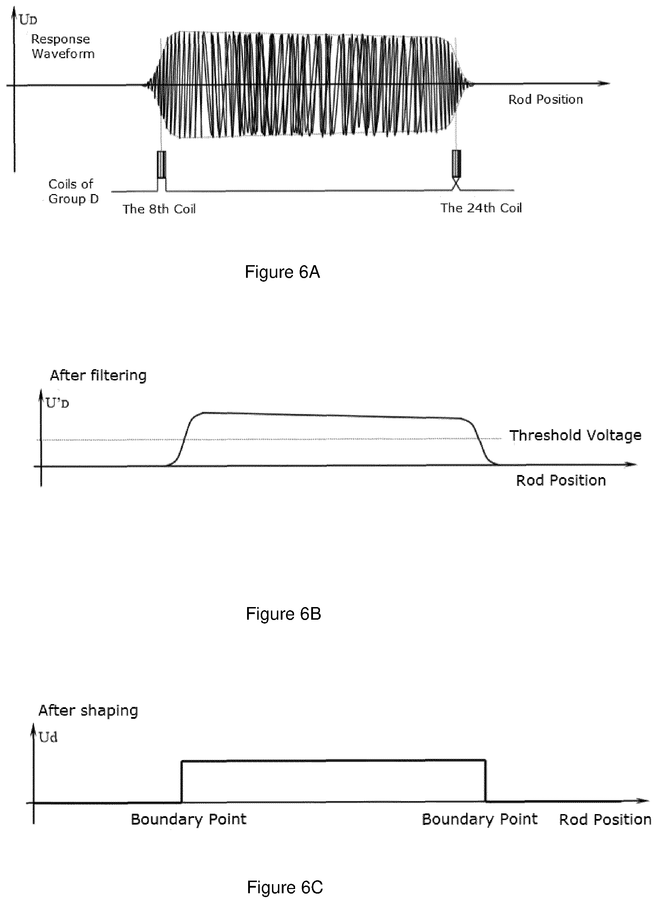

Figures 6A, 6B and 6C are respectively schematic diagrams showing the measurement signal processing process of the rod position detector in the preferred embodiment of the present invention,
Figure 7 is a schematic diagram showing the connection mode of the preferred embodiment of the present invention,
Figure 8 is a flow chart showing the measurement signal processing of the preferred embodiment of the present invention, and
Figure 9 is a schematic diagram showing the avoidance interval AB and the calculation interval BC of the preferred embodiment of the present invention.

### Marking Instructions of the Figures:

10-Excitation Power Supply, 11-AC Transformer, 20-Integrated Interface Board, 30-Universal Signal Processor, 40-Rod Position Detector, 41-1-The First Primary Coil Terminal, 41-2-The Second Primary Coil Terminal, 42-The First Auxiliary Coil Terminal, 43-The Second Auxiliary Coil Terminal, 44-Group A Measurement Coil Signal Terminal, 45-Group B Measurement Coil Signal Terminal, 46-Group C Measurement Coil Signal Terminal, 47-Group D Measurement Coil Signal Terminal, 48-Group E Measurement Coil Signal Terminal, 49-Measurement Coil Common Terminal, 50-Rod Position Processing Cabinet, 60-Main Control Room Analog Indicator Board, 71-Sampling Resistor, 72-Short-circuit-proof Fuse, 73-Rod Drop Test Switch

### DETAILED DESCRIPTION OF THE INVENTION

The present invention discloses a full-digital control rod position measurement device and a method thereof. Preferred embodiments are combined hereinafter to further elaborate the implementation of the present invention.

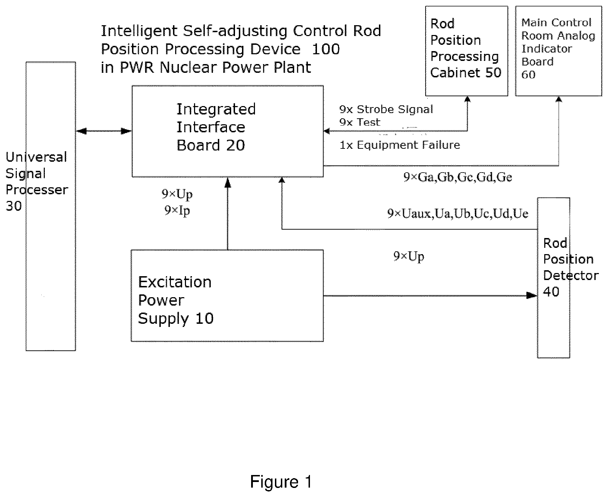

Figure 1 shows the module structure of the full-digital control rod position measurement device 100.

Preferably, the full-digital control rod position measurement device comprises an excitation power supply 10 and a universal signal processor 30, wherein the excitation power supply 10 provides a working power supply to the primary coils of the rod position detectors located within the containment, wherein the universal signal processor 30 collects the signals output by the rod position detectors, and the signals output by the rod position detectors comprise the voltage signals of the primary coils, the voltage signals of each group of measurement coils and the voltage signals of the auxiliary coils, wherein the universal signal processor 30 processes the output signals of the detectors according to a preset algorithm, thereby compensating for the variation of magnetic field strength of the rod position detectors, and simultaneously outputs the control rod position signals.

According to the aforesaid technical solution, the universal signal processor 30 collects the voltage signals of the auxiliary coils of the detectors, calculates the voltage amplitudes of the auxiliary coils according to the voltage signals of the auxiliary coils, calculates the voltage amplitudes of each group of measurement coils according to the voltage signals of each group of measurement coils, and processes the voltage signals of each group of measurement coils by using the voltage amplitudes of the auxiliary coils, thereby compensating for the measurement signal fluctuation caused by the variation of measurement conditions. The universal signal processor 30 respectively compares the processed voltages of each group of measurement coils with the preset threshold voltage, thus forming the control rod position signals.

According to the aforesaid technical solution, the excitation power supply 10 adopts an AC transformer 11.

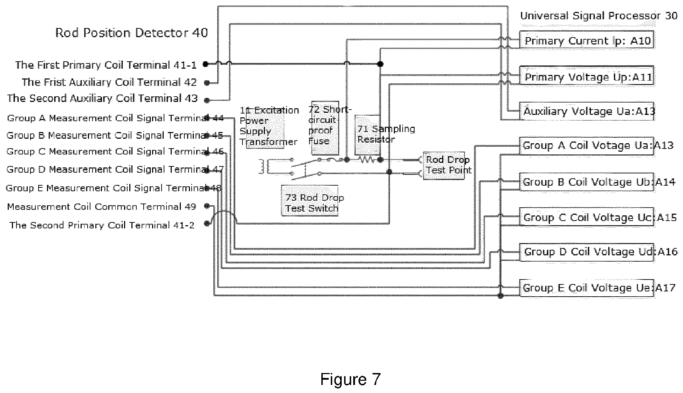

According to the aforesaid technical solution, the universal signal processor 30 adopts the Compact RIO platform developed by National Instruments Corporation, USA. Figure 7 shows the connection mode of the full-digital control rod position measurement device 100. Preferably, the excitation power supply 10 adopts an AC transformer 11 (excitation power transformer). The full-digital rod position measurement device 100 is provided with a rod drop test point, and further comprises a sampling resistor 71, a short-circuit-proof fuse 72 and a rod drop test switch 73. The output end of the AC transformer 11 is electrically connected with the input side of the rod drop test switch 73, and the short-circuit-proof fuse 72 and the sampling resistor 71 are sequentially connected in series between the output end of the rod drop test switch 73 and the rod drop test point.

As shown in Figure 7, preferably, the rod position detector 40 is provided with a first primary coil terminal 41-1, a second primary coil terminal 41-2, a first auxiliary coil terminal 42, a second auxiliary coil terminal 43, signal terminals 44-48 of measurement coils of groups A to E and a measurement coil common terminal 49. Preferably, the preset numerical processing algorithm is to compensate for the position deviation of the control rod and the variation of the ambient temperature according to the measurement voltage signals of the auxiliary coils. In other words, the universal signal processor 30 forms control rod position signals in the form of Gray code (hereinafter referred to as Gray code rod position signals) through threshold comparison according to the collected voltages of the auxiliary coils and the collected voltages of each group of measurement coils.

Specifically, the output signals of the rod position detectors comprise but are not limited to the voltage signals of the primary coils, the current signals of the primary coils, the voltage signals of each group of measurement coils and the voltage signals of the auxiliary coils. The universal signal processor 30 calculates the average value of voltage amplitudes of the auxiliary coils according to the voltage signals of the auxiliary coils. The universal signal processor 30 calculates the average value of voltage amplitudes of each group of measurement coils according to the voltage signals of each group of measurement coils, and performs a homogenization processing according to the average value of voltage amplitudes of the auxiliary coils. The universal signal processor 30 compares the homogenized average value of voltage amplitudes of each group of measurement coils with the preset threshold voltage, thereby forming the Gray code rod position signals.

Preferably, the integrated interface board 20 is provided with a bus latch (not shown), the rod position processing cabinet 50 can provide nine strobe signals, and the universal signal processor 30 outputs the Gray code rod position signals to the rod position processing cabinet 50 through the bus latch according to the strobe signals. Alternatively, the universal signal processor 30 can also output signals reflecting the operational failure of the rod position measurement device to the rod position processing cabinet 50, and signals showing "the measurement channel being under test" of each rod cluster, etc.

Preferably, the full-digital rod position measurement device 100 also transmits the Gray code rod position signals to a main control room analog indicator board 60 through the integrated interface board 20 for analog indication.

According to the aforesaid embodiment of the present invention, the full-digital rod position measurement device 100 switches among an automatic correction state, an operation state and a test state. When it is in the automatic correction state, namely, the measurement channel is automatically corrected under the thermal working condition after the reactor overhaul, thereby obtaining the setting threshold of each group of measurement coils, and the threshold is stored in the setting results file (to be used after the equipment failure maintenance). When it is in the operation state, namely, the state it switches into after the correction is completed, the measurement position of the control rod is determined according to the measurement signals and the setting threshold. During the normal operation of the reactor, when performing the regular test of the rod position measurement channel, it switches to the test state, and performs the channel correction 0, correction 1 and the continuous change test of the output rod position.

As shown in Figure 7, the signals required to be processed by the full-digital rod position measurement device are as follows:
1. 75 analog input signals
   1) Each rod position detector 40 has 8 analog input signals (9 rod position detectors and 72 analog input signals in total), which respectively are:
      a) Primary coil voltage Up;
      b) Primary coil current Ip;
      c) Auxiliary coil voltage Uaux;
      d) Group A coil voltage Ua;
      e) Group B coil voltage Ub;
      f) Group C coil voltage Uc;
      g) Group D coil voltage Ud;
      h) Group E coil voltage Ue;
   2) The analog input signals for monitoring the internal working power of the case are preferably 3 analog input signals.
2. 9 switch input signals 9 strobe signals (switch input signals) are provided by the rod position processing cabinet 50.
3. 61 switch output signals
   1) 9 "rod cluster being under test" signals output to the rod position processing cabinet 50;
   2) 5-bit Gray code signal and 1 bus switch signal output to the rod position processing cabinet 50;
   3) "Equipment failure" signal output to the rod position processing cabinet 50;
   4) 9 5-bit Gray code rod position signals output to the main control room.

Preferably, according to the requirements of input and output channel numbers and system performance, the universal signal processor 30 adopts the Compact RIO platform developed by National Instruments Corporation, USA.

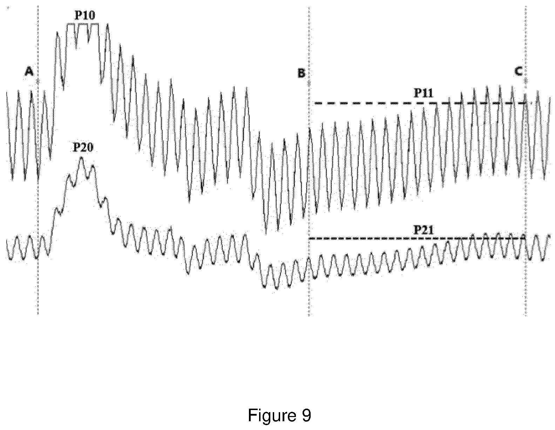

As shown in Figure 9, curve P10 in Figure 9 is the auxiliary voltage waveform, curve P20 is the group A measurement voltage waveform, P11 is the auxiliary voltage mean line, P21 is the group A measurement voltage mean line (the group A measurement voltage waveform is taken as an example herein, and the rest groups of measurement voltage waveforms are handled in the same manner). The present invention also discloses a full-digital rod position measurement method, wherein through searching the avoidance interval AB interfered by the control rod motion, the avoidance interval AB is avoided when calculating the voltages of each group of measurement coils, thereby obtaining each group of measurement coil voltage signals representing the actual position of the control rod, wherein the above groups of measurement coil voltage signals are used as the basis for judging the actual position of the control rod, comprising the steps of:
Step S1: collecting the signals of detectors: the universal signal processor collects the output signals of the rod position detectors, wherein the output signals of the rod position detectors comprise the voltage signals of the primary coils, the voltage signals of each groups of measurement coils and the voltage signals of the auxiliary coils;
Step S2: determining the calculation interval: according to the auxiliary coil voltage signals, the universal signal processor searches for the starting point A and the ending point B of the avoidance interval that need to be avoided due to the interference of the control rod motion in the searching interval; the ending point B of the avoidance interval is regarded as the starting point of the calculation interval, and the point located 400ms behind the ending point of the avoidance interval is regarded as the ending point C of the calculation interval; the interval between the starting point A of the avoidance interval and the ending point B of the avoidance interval is recorded as the avoidance interval AB, and the interval between the ending point B of the avoidance interval and the ending point C of the calculation interval is recorded as the calculation interval BC;
Step S3: calculating the voltages of auxiliary coils: the universal signal processor calculates the average value of voltage amplitudes of the auxiliary coils in the calculation interval BC;
Step S4: calculating the voltages of each group of measurement coils: the universal signal processor calculates the voltage amplitude average value of each group of measurement coils in the calculation interval BC;
Step S5: calculating the voltage correction value of each group of measurement coils: the universal signal processor divides the voltage average value of each group of measurement coils by the voltage average value of the auxiliary coils, thereby obtaining the voltage correction value of each group of measurement coils;
Step S6: comparing the thresholds: the universal signal processor compares the voltage correction value of the above groups of measurement coils with the preset threshold voltage, thereby forming the control rod position signals.

In step S2, when the avoidance interval AB cannot be searched by the universal signal processor, the last 400ms of the searching interval is taken as the calculation interval BC.

According to the aforesaid embodiment, one full-digital rod position measurement device 100 can realize the parallel data collection and control processing of 72 analog signals of 9 rod position detectors at the same time, capable of storing and displaying the failures, abnormalities and waveforms containing abnormal variations. Thus, the relevant requirements of rod position measurement processing can be satisfied.

It's worth mentioning that, through adopting the full-digital rod position measurement device of the present invention, the threshold setting of the measurement channel and the appraisal of the measurement performance can be completed when the control rod is lifted and lowered for one stroke, and the occupation time of the critical path of refueling outage can be shortened to be within one third of the original time occupied by the performance appraisal of the rod position system.

The present invention also discloses another preferred embodiment. In this embodiment, the original analog circuit or analog-to-digital mixed circuit processing of the rod position measurement is transformed into a digital processing, and the full-digital rod position measurement device comprises an excitation power supply and a universal signal processor, wherein the excitation power supply provides a working power supply to the primary coils of the rod position detectors located within the containment, wherein the universal signal processor collects the signals output by the rod position detectors, and the signals output by the rod position detectors comprise the voltage signals of the primary coils, the current signals of the primary coils, the voltage signals of each group of measurement coils and the voltage signals of the auxiliary coils, wherein the universal signal processor processes the output signals of the detectors according to a preset algorithm, thereby compensating for the variations of magnetic field strength of the rod position detectors, and simultaneously outputs the control rod position signals.

According to the aforesaid technical solution, the universal signal processor collects the voltage signals of the auxiliary coils of the detectors and the current signals of the primary coils, calculates the voltage amplitudes of the auxiliary coils according to the voltage signals of the auxiliary coils, calculates the voltage amplitudes of primary coils according to the current signals of the primary coils, calculates the voltage amplitudes of each group of measurement coils according to the voltage signals of each group of measurement coils, and processes the voltage signals of each group of measurement coils by using the voltage amplitudes of the auxiliary coils or the current amplitudes of the primary coils, thereby compensating for the measurement signal fluctuation caused by the variation of measurement conditions. The universal signal processor respectively compares the processed voltages of each group of measurement coils to the preset threshold voltage, thus forming the control rod position signals.

According to the aforesaid technical solution, the excitation power supply adopts an AC transformer.

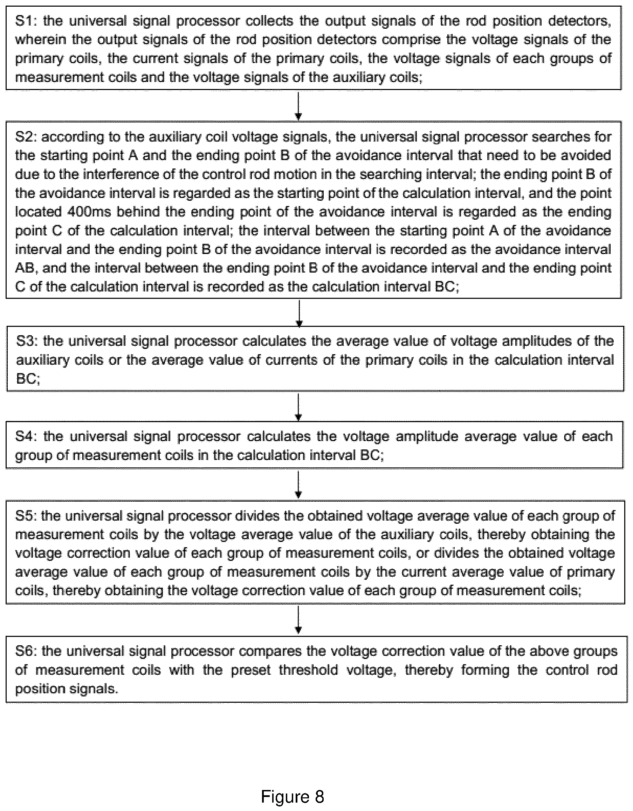

As shown in Figure 8, the present invention also discloses a full-digital rod position measurement method, wherein through searching the avoidance interval AB interfered by the control rod motion, the avoidance interval AB is avoided when calculating the voltages of each group of measurement coils, thereby obtaining each group of measurement coil voltage signals representing the actual position of the control rod, wherein the above groups of measurement coil voltage signals are used as the basis for judging the actual position of the control rod, comprising the steps of:
Step S1: collecting the signals of detectors: the universal signal processor collects the output signals of the rod position detectors, wherein the output signals of the rod position detectors comprise the voltage signals of the primary coils, the current signals of the primary coils, the voltage signals of each groups of measurement coils and the voltage signals of the auxiliary coils;
Step S2: determining the calculation interval: according to the auxiliary coil voltage signals, the universal signal processor searches for the starting point A and the ending point B of the avoidance interval that need to be avoided due to the interference of the control rod motion in the searching interval; the ending point B of the avoidance interval is regarded as the starting point of the calculation interval, and the point located 400ms behind the ending point of the avoidance interval is regarded as the ending point C of the calculation interval; the interval between the starting point A of the avoidance interval and the ending point B of the avoidance interval is recorded as the avoidance interval AB, and the interval between the ending point B of the avoidance interval and the ending point C of the calculation interval is recorded as the calculation interval BC;
Step S3: calculating the voltages of auxiliary coils or the currents of primary coils: the universal signal processor calculates the average value of voltage amplitudes of the auxiliary coils or the average value of currents of the primary coils in the calculation interval BC;
Step S4: calculating the voltages of each group of measurement coils: the universal signal processor calculates the voltage amplitude average value of each group of measurement coils in the calculation interval BC;
Step S5: calculating the voltage correction value of each group of measurement coils: the universal signal processor divides the obtained voltage average value of each group of measurement coils by the voltage average value of the auxiliary coils, thereby obtaining the voltage correction value of each group of measurement coils, or divides the obtained voltage average value of each group of measurement coils by the current average value of primary coils, thereby obtaining the voltage correction value of each group of measurement coils;
Step S6: comparing thresholds: the universal signal processor compares the voltage correction value of the above groups of measurement coils with the preset threshold voltage, thereby forming the control rod position signals.

According to the aforesaid full-digital rod position measurement method, in step S2, when the avoidance interval AB cannot be searched by the universal signal processor, the waveform of 400ms in the searching interval is taken as the calculation interval BC.

According to the aforesaid full-digital rod position measurement method, in step S3, the universal signal processor calculates the average value of voltage amplitudes of the auxiliary coils or the average value of currents of the primary coils in calculation interval BC by using fast Fourier transform or average peak-to-peak value calculation method.

Those skilled in the art may modify the technical solutions recorded in the aforesaid embodiments, or equally replace some of the technical features according to the specification of the present invention.

## Claims

1. A full-digital rod position measurement device, wherein the measurement device comprises:
an excitation power supply (10), wherein the excitation power supply is configured to provide a working power supply to primary coils of rod position detectors (40) located within a containment; and
an universal signal processor (39), wherein the universal signal processor (30) is configured to collect signals output by the rod position detectors, the signals output by the rod position detectors (40) comprise voltage signals of primary coils, current signals of the primary coils, voltage signals of each group of measurement coils and voltage signals of auxiliary coils, wherein the universal signal processor (30) is further configured to process output signals of the detectors (40) according to a preset algorithm, thereby compensating for variation of magnetic field strength of the rod position detectors, and simultaneously outputs control rod position signals;
wherein the measurement device is **characterized in that** the universal signal processor is further configured to perform the following functions of
- searching for a starting point A and a ending point B of an avoidance interval that need to be avoided due to an interference of a control rod motion in a searching interval; the ending point B of the avoidance interval is regarded as a starting point of a calculation interval, and a point located 400ms behind an ending point of the avoidance interval is regarded as ending point C of the calculation interval; the interval between the starting point A of the avoidance interval and ending point B of the avoidance interval is recorded as an avoidance interval AB, and the interval between the ending point B of the avoidance interval and the ending point C of the calculation interval is recorded as a calculation interval BC;
- calculating an average value of voltage amplitudes of the auxiliary coils or an average value of currents of the primary coils in the calculation interval BC;
- calculating a voltage amplitude average value of each group of measurement coils in the calculation interval BC;
- dividing an obtained voltage average value of each group of measurement coils by a voltage average value of the auxiliary coils, thereby obtaining a voltage correction value of each group of measurement coils, or divide an obtained voltage average value of each group of measurement coils by a current average value of primary coils, thereby obtaining the voltage correction value of each group of measurement coils;
- comparing a voltage correction value of the above groups of measurement coils with a preset threshold voltage, thereby forming the control rod position signals;
wherein the avoidance interval AB is avoided when voltages of each group of measurement coils are calculated by the universal signal processor, thereby each group of measurement coil voltage signals representing an actual position of the control rod is obtained through searching the avoidance interval AB interfered by a control rod motion, and the above groups of measurement coil voltage signals are used as basis for judging the actual position of a control rod.

2. The full-digital rod position measurement device of claim 1, wherein the universal signal processor is further configured to collect the voltage signals of the auxiliary coils of the detectors and the current signals of the primary coils, calculate voltage amplitudes of the auxiliary coils according to the voltage signals of the auxiliary coils, calculate the voltage amplitudes of primary coils according to the current signals of the primary coils, calculate the voltage amplitudes of each group of measurement coils according to the voltage signals of each group of measurement coils, and process the voltage signals of each group of measurement coils with the voltage amplitudes of the auxiliary coils or the current amplitudes of the primary coils, thereby compensating for the measurement signal fluctuation caused by the variation of measurement conditions, wherein the universal signal processor is configured to respectively compare the processed voltages of each group of measurement coils with the preset threshold voltage, thus forming the control rod position signals.

3. The full-digital rod position measurement device of claim 1, wherein the excitation power supply is an AC transformer.

4. The full-digital rod position measurement device of claim 1, a waveform of 400ms in the searching interval is taken as the calculation interval BC when the avoidance interval AB cannot be searched by the universal signal processor.

5. The full-digital rod position measurement device of claim 1, wherein the universal signal processor is further configured to calculate the average value of voltage amplitudes of the auxiliary coils or the average value of currents of the primary coils in calculation interval BC with fast Fourier transform or average peak-to-peak value calculation method.

6. A full-digital rod position measurement method, comprising the steps of:
step S1: collecting signals of detectors: an universal signal processor collects output signals of rod position detectors, wherein the output signals of the rod position detectors comprise voltage signals of primary coils, current signals of the primary coils, voltage signals of each groups of measurement coils and voltage signals of the auxiliary coils;
step S2: determining a calculation interval: according to auxiliary coil voltage signals, the universal signal processor searches for a starting point A and a ending point B of an avoidance interval that need to be avoided due to an interference of a control rod motion in a searching interval; a ending point B of the avoidance interval is regarded as a starting point of the calculation interval, and a point located 400ms behind an ending point of the avoidance interval is regarded as a ending point C of the calculation interval; the interval between the starting point A of the avoidance interval and the ending point B of the avoidance interval is recorded as an avoidance interval AB, and the interval between the ending point B of the avoidance interval and the ending point C of the calculation interval is recorded as a calculation interval BC;
step S3: calculating voltages of auxiliary coils or currents of primary coils: the universal signal processor calculates an average value of voltage amplitudes of the auxiliary coils or an average value of currents of the primary coils in the calculation interval BC;
step S4: calculating voltages of each group of measurement coils: the universal signal processor calculates a voltage amplitude average value of each group of measurement coils in the calculation interval BC;
step S5: calculating a voltage correction value of each group of measurement coils: the universal signal processor divides an obtained voltage average value of each group of measurement coils by a voltage average value of the auxiliary coils, thereby obtaining the voltage correction value of each group of measurement coils, or divides an obtained voltage average value of each group of measurement coils by a current average value of primary coils, thereby obtaining the voltage correction value of each group of measurement coils;
step S6: comparing thresholds: the universal signal processor compares a voltage correction value of the above groups of measurement coils with a preset threshold voltage, thereby forming control rod position signals;
wherein an avoidance interval AB is avoided when calculating voltages of each group of measurement coils, thereby each group of measurement coil voltage signals representing an actual position of the control rod is obtained through searching the avoidance interval AB interfered by a control rod motion, and the above groups of measurement coil voltage signals are used as basis for judging the actual position of a control rod.

7. The full-digital rod position measurement method of claim 4, wherein in step S2, a waveform of 400ms in the searching interval is taken as the calculation interval BC when the avoidance interval AB cannot be searched by the universal signal processor.

8. The full-digital rod position measurement method of claim 4, wherein in step S3, the average value of voltage amplitudes of the auxiliary coils or the average value of currents of the primary coils in calculation interval BC is calculated by the universal signal processor with fast Fourier transform or average peak-to-peak value calculation method.

## Patentansprüche

1. Ein volldigitales Gerät zur Messung der Stabposition, wobei das Messgerät umfasst:
eine Erregerstromversorgung (10),
wobei die Erregerstromversorgung so konfiguriert ist, dass sie eine Arbeitsstromversorgung für Primärspulen von Stabpositionsdetektoren (40) bereitstellt, die sich innerhalb einer Ummantelung befinden; und
einen universellen Signalprozessor (39), wobei der universelle Signalprozessor (30) dazu konfiguriert ist, von den Stabpositionsdetektoren ausgegebene Signale zu erfassen, wobei die von den Stabpositionsdetektoren (40) ausgegebenen Signale Spannungssignale von Primärspulen, Stromsignale von Primärspulen, Spannungssignale jeder Gruppe von Messspulen und Spannungssignale von Hilfsspulen umfassen, wobei der universelle Signalprozessor (30) ferner dazu konfiguriert ist, Ausgangssignale der Stabpositionsdetektoren (40) gemäß einem voreingestellten Algorithmus zu verarbeiten, wodurch Schwankungen der magnetischen Feldstärke der Stabpositionsdetektoren ausgeglichen werden, und gleichzeitig Steuerstabpositionssignale ausgibt;
wobei das Messgerät **dadurch gekennzeichnet ist, dass** der universelle Signalprozessor weiterhin dazu konfiguriert ist, die folgenden Funktionen auszuführen:
- Suchen nach einem Startpunkt A und einem Endpunkt B eines Vermeidungsintervalls, die aufgrund einer Störung einer Steuerstabbewegung in einem Suchintervall vermieden werden müssen; der Endpunkt B des Vermeidungsintervalls wird als Startpunkt eines Berechnungsintervalls betrachtet, und ein Punkt, der 400 ms hinter einem Endpunkt des Vermeidungsintervalls liegt, wird als Endpunkt C des Berechnungsintervalls betrachtet; das Intervall zwischen dem Startpunkt A des Vermeidungsintervalls und dem Endpunkt B des Vermeidungsintervalls wird als Vermeidungsintervall AB aufgezeichnet, und das Intervall zwischen dem Endpunkt B des Vermeidungsintervalls und dem Endpunkt C des Berechnungsintervalls wird als Berechnungsintervall BC aufgezeichnet;
- Berechnen eines Durchschnittswerts der Spannungsamplituden der Hilfsspulen oder eines Durchschnittswerts der Ströme der Primärspulen im Berechnungsintervall BC;
- Berechnen eines Spannungsamplituden-Durchschnittswertes jeder Gruppe von Messspulen im Berechnungsintervall BC;
- Dividieren eines erhaltenen Spannungsdurchschnittswerts jeder Gruppe von Messspulen durch einen Spannungsdurchschnittswert der Hilfsspulen, wodurch ein Spannungskorrekturwert jeder Gruppe von Messspulen erhalten wird, oder Dividieren eines erhaltenen Spannungsdurchschnittswerts jeder Gruppe von Messspulen durch einen Stromdurchschnittswert der Primärspulen, wodurch der Spannungskorrekturwert jeder Gruppe von Messspulen erhalten wird;
- Vergleichen eines Spannungskorrekturwertes der oben genannten Gruppen von Messspulen mit einer voreingestellten Schwellenspannung, wodurch die Steuerstabpositionssignale gebildet werden;
wobei das Vermeidungsintervall AB vermieden wird, wenn die Spannungen jeder Gruppe von Messspulen durch den universellen Signalprozessor berechnet werden, wodurch jede Gruppe von Messspulenspannungssignalen, die eine tatsächliche Position der Steuerstange darstellen, durch Suchen des durch eine Steuerstangenbewegung beeinträchtigten Vermeidungsintervalls AB erhalten wird, und die obigen Gruppen von Messspulenspannungssignalen als Grundlage zum Beurteilen der tatsächlichen Position einer Steuerstange verwendet werden.

2. Volldigitale Stabpositionsmessvorrichtung nach Anspruch 1, wobei der universelle Signalprozessor ferner dazu konfiguriert ist, die Spannungssignale der Hilfsspulen der Detektoren und die Stromsignale der Primärspulen zu erfassen, Spannungsamplituden der Hilfsspulen entsprechend den Spannungssignalen der Hilfsspulen zu berechnen, die Spannungsamplituden der Primärspulen entsprechend den Stromsignalen der Primärspulen zu berechnen, die Spannungsamplituden jeder Gruppe von Messspulen entsprechend den Spannungssignalen jeder Gruppe von Messspulen zu berechnen und die Spannungssignale jeder Gruppe von Messspulen mit den Spannungsamplituden der Hilfsspulen oder den Stromamplituden der Primärspulen zu verarbeiten, wodurch die durch die Variation der Messbedingungen verursachte Messsignalschwankung kompensiert wird, wobei der universelle Signalprozessor dazu konfiguriert ist, die verarbeiteten Spannungen jeder Gruppe von Messspulen jeweils mit der voreingestellten Schwellenspannung zu vergleichen und dadurch die Steuerstabpositionssignale zu bilden.

3. Das volldigitale Stangenpositionsmessgerät nach Anspruch 1, wobei die Erregerstromversorgung ein Wechselstromtransformator ist.

4. Das volldigitale Stangenpositionsmessgerät nach Anspruch 1, wobei eine Wellenform von 400 ms im Suchintervall als Berechnungsintervall BC verwendet wird, wenn das Vermeidungsintervall AB nicht vom universellen Signalprozessor gesucht werden kann.

5. Volldigitale Stangenpositionsmessvorrichtung nach Anspruch 1, wobei der universelle Signalprozessor weiterhin dazu konfiguriert ist, den Durchschnittswert der Spannungsamplituden der Hilfsspulen oder den Durchschnittswert der Ströme der Primärspulen im Berechnungsintervall BC mit einer schnellen Fourier-Transformation oder einer Methode zur Berechnung des durchschnittlichen Spitze-Spitze-Werts zu berechnen.

6. Ein volldigitales Verfahren zur Messung der Stangenposition, das die Schritte umfasst:
Schritt S1: Sammeln von Signalen von Detektoren: Ein universeller Signalprozessor sammelt Ausgangssignale von Stabpositionsdetektoren, wobei die Ausgangssignale der Stabpositionsdetektoren Spannungssignale von Primärspulen, Stromsignale der Primärspulen, Spannungssignale jeder Gruppe von Messspulen und Spannungssignale der Hilfsspulen umfassen;
Schritt S2: Bestimmen eines Berechnungsintervalls: Der universelle Signalprozessor sucht anhand von Hilfsspulenspannungssignalen nach einem Startpunkt A und einem Endpunkt B eines Vermeidungsintervalls, die aufgrund einer Störung einer Steuerstabbewegung in einem Suchintervall vermieden werden müssen; ein Endpunkt B des Vermeidungsintervalls wird als Startpunkt des Berechnungsintervalls betrachtet, und ein Punkt, der 400 ms hinter einem Endpunkt des Vermeidungsintervalls liegt, wird als Endpunkt C des Berechnungsintervalls betrachtet; das Intervall zwischen dem Startpunkt A des Vermeidungsintervalls und dem Endpunkt B des Vermeidungsintervalls wird als Vermeidungsintervall AB aufgezeichnet, und das Intervall zwischen dem Endpunkt B des Vermeidungsintervalls und dem Endpunkt C des Berechnungsintervalls wird als Berechnungsintervall BC aufgezeichnet;
Schritt S3: Berechnen von Spannungen der Hilfsspulen oder Strömen der Primärspulen: Der universelle Signalprozessor berechnet einen Durchschnittswert der Spannungsamplituden der Hilfsspulen oder einen Durchschnittswert der Ströme der Primärspulen im Berechnungsintervall BC;
Schritt S4: Berechnen der Spannungen jeder Gruppe von Messspulen: Der universelle Signalprozessor berechnet einen Durchschnittswert der Spannungsamplitude jeder Gruppe von Messspulen im Berechnungsintervall BC;
Schritt S5: Berechnen eines Spannungskorrekturwerts für jede Gruppe von Messspulen: Der universelle Signalprozessor dividiert einen erhaltenen Spannungsdurchschnittswert für jede Gruppe von Messspulen durch einen Spannungsdurchschnittswert der Hilfsspulen und erhält dadurch den Spannungskorrekturwert für jede Gruppe von Messspulen, oder dividiert einen erhaltenen Spannungsdurchschnittswert für jede Gruppe von Messspulen durch einen Stromdurchschnittswert der Primärspulen und erhält dadurch den Spannungskorrekturwert für jede Gruppe von Messspulen;
Schritt S6: Vergleichen der Schwellenwerte: Der universelle Signalprozessor vergleicht einen Spannungskorrekturwert der oben genannten Gruppen von Messspulen mit einer voreingestellten Schwellenspannung und bildet so Steuerstabpositionssignale;
wobei bei der Berechnung der Spannungen jeder Gruppe von Messspulen ein Vermeidungsintervall AB vermieden wird, wodurch jede Gruppe von Messspulenspannungssignalen, die eine tatsächliche Position der Steuerstange darstellen, durch Suchen des durch eine Steuerstangenbewegung beeinträchtigten Vermeidungsintervalls AB erhalten wird, und die obigen Gruppen von Messspulenspannungssignalen als Grundlage zur Beurteilung der tatsächlichen Position einer Steuerstange verwendet werden.

7. Volldigitales Verfahren zur Messung der Stabposition nach Anspruch 4, wobei in Schritt S2 eine Wellenform von 400 ms im Suchintervall als Berechnungsintervall BC verwendet wird, wenn das Vermeidungsintervall AB nicht vom universellen Signalprozessor gesucht werden kann.

8. Volldigitales Verfahren zur Messung der Stabposition nach Anspruch 4, wobei in Schritt S3 der Durchschnittswert der Spannungsamplituden der Hilfsspulen oder der Durchschnittswert der Ströme der Primärspulen im Berechnungsintervall BC durch den universellen Signalprozessor mit schneller Fourier-Transformation oder mit der Methode der Berechnung des durchschnittlichen Spitze-Spitze-Werts berechnet wird.

## Revendications

1. Dispositif de mesure entièrement numérique de la position d'une tige, dans lequel le
dispositif de mesure comprend :
une alimentation électrique d'excitation (10),
dans lequel l'alimentation électrique d'excitation est configurée pour fournir une alimentation électrique de travail aux bobines primaires des détecteurs de position de tige (40) situés à l'intérieur d'une enceinte de confinement ; et
un processeur de signaux universel (30), dans lequel le processeur de signaux universel (30) est configuré pour collecter les signaux émis par les détecteurs de position de la tige, les signaux émis par les détecteurs de position de la tige (40) comprennent les signaux de tension des bobines primaires, les signaux de courant des bobines primaires, les signaux de tension de chaque groupe de bobines de mesure et les signaux de tension des bobines auxiliaires, le processeur de signaux universel (30) est en outre configuré pour traiter les signaux de sortie des détecteurs (40) selon un algorithme prédéfini, compensant ainsi la variation de l'intensité du champ magnétique des détecteurs de position de la tige, et émet simultanément des signaux de position de la tige de commande ;
dans lequel le dispositif de mesure est **caractérisé par le fait que** le processeur de signal universel est en outre configuré pour exécuter les fonctions suivantes :
- rechercher un point de départ A et d'un point d'arrivée B d'un intervalle d'évitement qui doit être évité en raison d'une interférence du mouvement d'une tige de commande dans un intervalle de recherche ; le point d'arrivée B de l'intervalle d'évitement est considéré comme le point de départ d'un intervalle de calcul, et un point situé 400 ms après un point de fin de l'intervalle d'évitement est considéré comme le point de fin C de l'intervalle de calcul ; l'intervalle entre le point de départ A de l'intervalle d'évitement et le point de fin B de l'intervalle d'évitement est enregistré comme un intervalle d'évitement AB, et l'intervalle entre le point de fin B de l'intervalle d'évitement et le point de fin C de l'intervalle de calcul est enregistré comme un intervalle de calcul BC ;
- calculer une valeur moyenne des amplitudes de tension des bobines auxiliaires ou une valeur moyenne des courants des bobines primaires dans l'intervalle de calcul BC ;
- calculer une valeur moyenne d'amplitude de tension pour chaque groupe de bobines de mesure dans l'intervalle de calcul BC ;
- diviser la valeur moyenne de tension obtenue pour chaque groupe de bobines de mesure par la valeur moyenne de tension des bobines auxiliaires, obtenir ainsi une valeur de correction de la tension de chaque groupe de bobines de mesure, ou diviser une valeur moyenne de tension obtenue de chaque groupe de bobines de mesure par une valeur moyenne de courant des bobines primaires, obtenant ainsi la valeur de correction de la tension de chaque groupe de bobines de mesure ;
- comparer une valeur de correction de tension des groupes de bobines de mesure susmentionnés à une tension seuil prédéfinie, ce qui permet de former les signaux de position de la tige de commande ;
dans lequel l'intervalle d'évitement AB est évité lorsque les tensions de chaque groupe de bobines de mesure sont calculées par le processeur de signal universel, Ainsi, chaque groupe de signaux de tension de bobine de mesure représentant une position réelle de la tige de commande est obtenu par la recherche de l'intervalle d'évitement AB interféré par un mouvement de la tige de commande, et les groupes susmentionnés de signaux de tension de bobine de mesure sont utilisés comme base pour juger de la position réelle d'une tige de commande.

2. Le dispositif de mesure entièrement numérique de la position de la tige de la revendication 1, dans lequel le processeur de signal universel est en outre configuré pour collecter les signaux de tension des bobines auxiliaires des détecteurs et les signaux de courant des bobines primaires, calculer les amplitudes de tension des bobines auxiliaires en fonction des signaux de tension des bobines auxiliaires, calculer les amplitudes de tension des bobines primaires en fonction des signaux de courant des bobines primaires, calculer les amplitudes de tension de chaque groupe de bobines de mesure en fonction des signaux de tension de chaque groupe de bobines de mesure, et traiter les signaux de tension de chaque groupe de bobines de mesure avec les amplitudes de tension des bobines auxiliaires ou les amplitudes de courant des bobines primaires, compensant ainsi la fluctuation du signal de mesure causée par la variation des conditions de mesure, le processeur de signal universel étant configuré pour comparer respectivement les tensions traitées de chaque groupe de bobines de mesure avec la tension seuil prédéfinie, formant ainsi les signaux de position de la tige de commande.

3. Le dispositif de mesure de la position de la tige entièrement numérique de la revendication 1, dans lequel l'alimentation électrique d'excitation est un transformateur à courant alternatif.

4. Le dispositif de mesure de la position de la tige entièrement numérique de la revendication 1, une forme d'onde de 400 ms dans l'intervalle de recherche est prise comme intervalle de calcul BC lorsque l'intervalle d'évitement AB ne peut pas être recherché par le processeur de signal universel.

5. Le dispositif entièrement numérique de mesure de la position de la tige de la revendication 1, dans lequel le processeur de signal universel est en outre configuré pour calculer la valeur moyenne des amplitudes de tension des bobines auxiliaires ou la valeur moyenne des courants des bobines primaires dans l'intervalle de calcul BC avec une transformée de Fourier rapide ou une méthode de calcul de la valeur moyenne crête à crête.

6. Méthode de mesure entièrement numérique de la position d'une tige, comprenant les étapes suivantes :
étape S1 : collecte des signaux des détecteurs : un processeur de signaux universel collecte les signaux de sortie des détecteurs de position des tiges, les signaux de sortie des détecteurs de position des tiges comprenant les signaux de tension des bobines primaires, les signaux de courant des bobines primaires, les signaux de tension de chaque groupe de bobines de mesure et les signaux de tension des bobines auxiliaires ;
étape S2 : détermination d'un intervalle de calcul : en fonction des signaux de tension de la bobine auxiliaire, le processeur de signaux universel recherche un point de départ A et d'un point d'arrivée B d'un intervalle d'évitement qui doit être évité en raison d'une interférence du mouvement d'une tige de commande dans un intervalle de recherche ; un point d'arrivée B de l'intervalle d'évitement est considéré comme le point de départ d'un intervalle de calcul, et un point situé 400 ms après un point de fin de l'intervalle d'évitement est considéré comme le point de fin C de l'intervalle de calcul ; l'intervalle entre le point de départ A de l'intervalle d'évitement et le point de fin B de l'intervalle d'évitement est enregistré comme un intervalle d'évitement AB, et l'intervalle entre le point de fin B de l'intervalle d'évitement et le point de fin C de l'intervalle de calcul est enregistré comme un intervalle de calcul BC ;
étape S3 : calcul des tensions des bobines auxiliaires ou des courants des bobines primaires : le processeur de signal universel calcule une valeur moyenne des amplitudes de tension des bobines auxiliaires ou une valeur moyenne des courants des bobines primaires dans l'intervalle de calcul BC ;
étape S4 : calcul des tensions de chaque groupe de bobines de mesure : le processeur de signal universel calcule une valeur moyenne d'amplitude de tension de chaque groupe de bobines de mesure dans l'intervalle de calcul BC ;
étape S5 : calcul d'une valeur de correction de la tension de chaque groupe de bobines de mesure : le processeur de signaux universel divise la valeur moyenne de tension obtenue pour chaque groupe de bobines de mesure par la valeur moyenne de tension des bobines auxiliaires, obtenir ainsi une valeur de correction de la tension de chaque groupe de bobines de mesure, ou diviser une valeur moyenne de tension obtenue de chaque groupe de bobines de mesure par une valeur moyenne de courant des bobines primaires, obtenant ainsi la valeur de correction de la tension de chaque groupe de bobines de mesure ;
étape S6 : comparaison des seuils : le processeur de signaux universel compare une valeur de correction de tension des groupes de bobines de mesure susmentionnés avec une tension de seuil prédéfinie, formant ainsi des signaux de position de la tige de commande ;
dans lequel un intervalle d'évitement AB est évité lors du calcul des tensions de chaque groupe de bobines de mesure, de sorte que chaque groupe de signaux de tension de bobine de mesure représentant une position réelle de la tige de commande est obtenu en recherchant l'intervalle d'évitement AB perturbé par un mouvement de la tige de commande, et les groupes susmentionnés de signaux de tension de bobine de mesure sont utilisés comme base pour juger de la position réelle d'une tige de commande.

7. La méthode entièrement numérique de mesure de la position de la tige de la revendication 4, dans laquelle, à l'étape S2, une forme d'onde de 400 ms dans l'intervalle de recherche est prise comme intervalle de calcul BC lorsque l'intervalle d'évitement AB ne peut pas être recherché par le processeur de signal universel.

8. La méthode entièrement numérique de mesure de la position de la tige de la revendication 4, dans laquelle, à l'étape S3, la valeur moyenne des amplitudes de tension des bobines auxiliaires ou la valeur moyenne des courants des bobines primaires dans l'intervalle de calcul BC est calculée par le processeur de signal universel avec la transformée de Fourier rapide ou la méthode de calcul de la valeur moyenne crête à crête.
